# EUROPÄISCHE PATENTSCHRIFT

(11) **EP 2 449 320 B1**
(45) Veröffentlichungstag und Bekanntmachung des Hinweises auf die Patenterteilung: **07.08.2019**
(21) Anmeldenummer: 10743009.2
(22) Anmeldetag: 26.06.2010
(51) Int. Cl.: F24S 20/67, F24S 20/66, F24S 25/20, F24S 25/33, F24S 25/632, F24S 25/636, F24S 25/65, F24S 80/70, E04B 2/90, E04D 3/08, E06B 3/54, E04B 2/96

(54) **SYSTEM UMFASSEND EINE GEBÄUDEHÜLLE UND EIN THERMISCHES ODER PHOTOVOLTAISCHES SOLARKOLLEKTORMODUL**
SYSTEM COMPRISING A BUILDING ENVELOPE AND A SOLAR THERMAL OR PHOTOVOLTAIC MODULE
SYSTÈME COMPRENANT UNE ENVELOPPE DE BÂTIMENT ET UN MODULE SOLAIRE THERMIQUE OU PHOTOVOLTAÏQUE

(30) Priorität: 29.06.2009 DE 202009008931 U
(43) Veröffentlichungstag der Anmeldung: 09.05.2012
(73) Patentinhaber: Meinhardt, Dirk, 69245 Bammental (DE)
(72) Erfinder: Meinhardt, Dirk, 69245 Bammental (DE)
(74) Vertreter: Patent- und Rechtsanwälte Ullrich & Naumann
(86) Internationale Anmeldenummer: PCT/DE2010/000740
(87) Internationale Veröffentlichungsnummer: WO 2011/000358

(56) Entgegenhaltungen:
- EP-A1- 1 777 357
- EP-A2- 1 505 220
- EP-A2- 2 031 661
- DE-A1- 3 016 693
- DE-A1-102004 055 187
- DE-A1-102005 039 495
- DE-U1- 20 010 299
- US-A- 5 571 338
- US-A1- 2007 131 273
- US-A1- 2008 302 407
- US-B1- 6 414 237

## Beschreibung

Die Erfindung betrifft ein System, umfassend eine Gebäudehülle und ein thermisches oder photovoltaisches Solarkollektormodul.

Solarkollektormodule werden zumeist im Dachbereich eines Gebäudes angebracht. Als Gebäudehülle mit Solarkollektormodulen wird daher im folgenden schwerpunktmäßig ein Gebäudedach behandelt. Solarkollektormodule können jedoch auch an der Fassade eines Gebäudes angebracht werden. Die nachstehenden Ausführungen zu Gebäudedächern gelten daher für Gebäudefassaden sinngemäß entsprechend.

Solarkollektormodule im Dachbereich eines Gebäudes sind entweder Indach- oder Aufdach-Module. Diese Differenzierung ergibt sich daraus, daß in der Regel bereits vorhandene Dächer mit den Solarkollektormodulen nachgerüstet werden. Es besteht dabei zum einen die Möglichkeit, die vorhandene Dachkonstruktion einschließlich der gegen Wasser in aller Form abdichtenden Dachhaut im wesentlichen unberührt zu lassen und mit den Solarkollektormodulen auf das Dach aufzusatteln. Zum anderen kann das Dach abgedeckt und das Gebäude mit einer neuen Dachdeckung versehen werden, zu der die Solarkollektormodule gehören und mit ihrer für die solare Strahlungsenergie empfänglichen Außenseite einen Teil der Dachhaut bilden.

Für die Aufdach-Anbringung von Solarkollektormodulen spricht der vergleichsweise geringe Gestehungsaufwand. Im allgemeinen bedarf es auch keiner behördlichen Genehmigung. Es wird jedoch ein Mehrgewicht auf die Tragkonstruktion des Dachs aufgebracht, das statisch verkraftet werden muß. Zu bedenken sind auch die Windkräfte an den Solarkollektormodulen und die Schneesackbildung darunter und/oder dahinter. Deshalb kommt in außerörtlichen Gebirgslagen, wo in Ermangelung von Alternativen die Gewinnung von Solarenergie wirtschaftlich besonders attraktiv wäre, die Aufdach-Anbringung von Solarkollektormodulen kaum in Betracht.

Die Indach-Anbringung von Solarkollektormodulen, bei der deren für solare Strahlungsenergie empfängliche Außenseite Teil der Wasser in aller Form abweisenden Dachhaut ist, bietet sich im Fall von Neubauten und Dachsanierungen an. Wird bei einer Dachsanierung eine bestehende Dachdeckung entfernt und durch eine neue ersetzt, tritt dank des Einsatzes zeitgemäßer Materialien tendenziell eine statische Entlastung der vorhandenen Tragkonstruktion ein. Für eine durchgreifende Dachsanierung einschließlich der Anbringung von Indach-Solarkollektormodulen spricht die dabei normalerweise verbesserte Wärmedämmung und die zukünftige Gewinnung von Solarenergie.

Das erfindungsgemäße Montagesystem wurde für die Indach-Anbringung von photovoltaischen Solarkollektormodulen entwickelt. Das soll jedoch seine Anwendung für die Indach-Anbringung thermischer Solarkollektormodule, die Aufdach-Anbringung von thermischen und photovoltaischen Solarkollektormodulen wie auch die Anbringung von thermischen und photovoltaischen Solarkollektormodulen an der Fassade eines Gebäudes nicht ausschließen.

Aus der DE 20 2008 004 055 U1 ist ein Indach-Photovoltaikmodul bekannt.

Aus der DE 101 32 557 A1 ist ein Montageprofil für die Anbringung von Photovoltaikmodulen an der Tragkonstruktion eines Gebäudedachs, einer Gebäudefassade oder einer frei stehenden Energiegewinnungsanlage bekannt. Das Montageprofil hat einen mittigen Schraubkanal und Dichtleisten beidseits davon.

Aus der DE 10 2004 055 187 A1 ist es bekannt, ein Photovoltaikmodul mit einem Montageprofil zu verkleben.

Aus der US 5 571 338 ist ein System, umfassend eine Gebäudehülle und ein Solarkollektormodul bekannt.

Aufgabe der Erfindung ist es, eine im Aufbau unaufwendige, für den universellen Gebrauch geeignete Gebäudehülle mit Solarkollektormodul(en) und ein Montagesystem dafür zu schaffen.

Diese Aufgabe wird durch die Merkmale des Anspruchs 1 gelöst.

Bei der Anbringung eines Solarkollektormoduls neben einem benachbarten Gebäudehüllenelement ist primär an die Anbringung zweier benachbarter, üblicherweise, aber nicht notwendigerweise baugleicher Solarkollektormodule zu denken, die Teil der Gebäudehülle sind. Das erfindungsgemäße Montagesystem ist aber auch geeignet, die Verbindung benachbarter, thermischer und photovoltaischer Solarkollektormodule sowie den Anschluß von Solarkollektormodulen an den Rand eines herkömmlichen, gemeinhin nicht zur Solarenergiegewinnung dienenden Teils der Gebäudehülle herzustellen. Genauso kann das Montagesystem zur Verbindung eines Solarkollektormoduls mit einem zum Zugang (z. B. Tür, Dachluke), zur Belichtung (z. B. Fenster), zur aktiven oder passiven Be- oder Entlüftung (z. B. Fenster, Zwangsentlüftung, Permanententlüftung, Zuluftgebläse) oder zum Brandschutz (z. B. Brandschutzklappe, NRWG) dienenden Funktionselement der Gebäudehülle verwendet werden. Damit werden vielfältige Gestaltungsmöglichkeiten für die Gebäudehülle eröffnet.

Die Anbringung des Solarkollektormoduls neben einem benachbarten Gebäudehüllenelement ist dahingehend zu verstehen, daß keine Verzahnung oder Überlappung vorliegt. Damit gehen montage- und wartungstechnische Vorteile einher. Ein jedes Solarkollektormodul kann einzeln montiert und bei Bedarf für Wartung oder Austausch demontiert werden. Die übrige Gebäudehülle bleibt unberührt.

Das Solarkollektormodul wird mit dem Montageprofil in Hinterlüftungsabstand von der Tragkonstruktion angebracht. Die Hinterlüftung ist in erster Linie für Photovoltaikmodule von Vorteil. Sie dient zur Abfuhr der Abwärme, die bei der photovoltaischen Erzeugung elektrischer Energie entsteht. Durch gute Hinterlüftung und Kühlung wird ein dauerhaft hoher Wirkungsgrad der Module erreicht.

Bei einer bevorzugten Ausführungsform hat das Montageprofil innen einen zur Anlage mit der Tragkonstruktion kommenden Profilrücken, einen davon mittig nach außen abstehenden Schraubkanal und eine neben dem Schraubkanal in Profillängsrichtung sich erstreckende Dichtleiste zur elastischen Auflage und Abdichtung des Solarkollektormoduls. Die an dem Modul angreifenden Halter sind an dem Schraubkanal festgeschraubt.

Bei einer bevorzugten Ausführungsform ist der Profilrücken des Montageprofils mit in Profillängsrichtung sich erstreckenden Nuten und Anlagestegen daneben profiliert.

Bei einer bevorzugten Ausführungsform hat der Profilrücken der Montageprofile eine Rasterlochung mit gestaffelten, in Profillängsrichtung sich erstreckenden Langlöchern. Die Langlöcher dienen zur Schraubbefestigung der Montageprofile. Es ist aber auch eine Schraubbefestigung der Montageprofile mit individueller Verbohrung, ein Aufschießen oder Aufschweißen der Montageprofile auf die Tragkonstruktion möglich. Die im allgemeinen kraftschlüssige Befestigung der Montageprofile richtet sich nach der Materialbeschaffenheit der Tragkonstruktion.

Die Montageprofile können beidseits des Schraubkanals mit separaten Dichtleisten versehen sein, die zur Abdichtung des Solarkollektormoduls und des benachbarten Gebäudehüllenelements dienen. Die Dichtleisten an dem Montageprofil können aber auch Teil eines Profildichtstreifens sein, der den Schraubkanal des Montageprofils übergreift. Es besteht die Möglichkeit, die an dem Solarkollektormodul angreifenden Halter durch den Profildichtstreifen hindurch mit dem Schraubkanal zu verschrauben. Die Abdichtung des Moduls wird dadurch nicht beeinträchtigt. Bei an anderer Stelle vorhandener Dichtebene können die Dichtleisten an dem Montageprofil auch entfallen.

Bei einer bevorzugten Ausführungsform ist das Solarkollektormodul gerahmt. Die Seitenwände seines Rahmens sind mit Nuten, Stegen oder Schlitzen versehen, mit denen die Halter pratzenartig zusammenwirken. Vorzugsweise werden dazu vorhandene Nuten oder Stege genutzt. An ein seitliches Schlitzen der Rahmen ist zu denken, wenn keine andere Angriffsmöglichkeit für die Halter besteht.

Bei einer alternativ bevorzugten Ausführungsform ist das Solarkollektormodul ungerahmt. Die Halter sind an der Innenseite des Moduls festgeklebt.

Bei einer bevorzugten Ausführungsform sind das Montageprofil und die Halter außen mit Klebstoff verfüllt.

Bei einer bevorzugten Ausführungsform hat die Klebstoff-Verfüllmasse beidseitige Flankenhaftung an dem Solarkollektormodul und dem benachbarten Gebäudehüllenelement. Die Klebstoff-Verfüllmasse überdeckt das Montageprofil und die Halter außen gänzlich, und sie schließt mit der Außenseite des Solarkollektormoduls und des benachbarten Gebäudehüllenelements bündig eben ab.

Bei einer bevorzugten Ausführungsform liegt zwischen dem Montageprofil mit den Haltern und der Klebstoff-Verfüllmasse ein Trennstreifen, der vorzugsweise aus geschlossenporigem Schaumkunststoff besteht.

Bei einer bevorzugten Ausführungsform ist an das Solarkollektormodul und das benachbarte Gebäudehüllenelement außen eine Abdeckleiste angeklebt, die das Montageprofil und die Halter unter Abdichtung überdeckt.

Bei einer bevorzugten Ausführungsform ist zwischen das Solarkollektormodul und das benachbarte Gebäudehüllenelement ein Dichtprofil eingefügt, das das Montageprofil und die Halter unter Abdichtung überdeckt.

Die Erfindung wird im folgenden anhand von in der Zeichnung dargestellten Ausführungsbeispielen näher erläutert. Es zeigen:
- Fig. 1: eine Gebäudehülle mit Solarkollektormodulen in Draufsicht von außen;
- Fig. 2: die Anbringung zweier benachbarter, gerahmter Photovoltaikmodule mit außen davor liegender Abdeckleiste am Beispiel eines Schrägdachs mit Schnitt im Bereich eines Riegels nach A - A von Fig. 1;
- Fig. 3: eine Draufsicht von außen auf die Anbringungsstelle gemäß Fig. 2;
- Fig. 4: die Anbringung zweier benachbarter, ungerahmter Photovoltaikmodule mit dazwischen liegender Verfülldichtung am Beispiel eines Flachdachs mit Schnitt im Bereich eines Pfostens nach B - B von Fig. 1;
- Fig. 5: eine Draufsicht von außen auf die Anbringungsstelle gemäß Fig. 4;
- Fig. 6: den Anschluß eines gerahmten Photovoltaikmoduls an ein erstes, gepratztes Randelement der Gebäudehülle mit außen davor liegender Abdeckleiste am Beispiel einer Fassade mit Schnitt im Bereich eines Riegels nach C - C von Fig. 1;
- Fig. 7: den Anschluß eines ungerahmten Photovoltaikmoduls an ein zweites, geschraubtes Randelement der Gebäudehülle mit dazwischen liegender Verfülldichtung am Beispiel einer Fassade mit Schnitt im Bereich eines Riegels nach C - C von Fig. 1;
- Fig. 8: eine Draufsicht von außen auf die Anschlußstelle gemäß Fig. 7;
- Fig. 9: den Anschluß eines ungerahmten Photovoltaikmoduls an ein Belichtungselement der Gebäudehülle, das eine Einfachverglasung hat, mit dazwischen liegender Verfülldichtung am Beispiel eines Schrägdachs mit Schnitt im Bereich eines Riegels nach D - D von Fig. 1;
- Fig. 10: den Anschluß eines gerahmten Photovoltaikmoduls an ein Belichtungselement der Gebäudehülle, das eine Isolierverglasung hat, mit dazwischen liegender Verfülldichtung am Beispiel eines Flachdachs mit Schnitt im Bereich eines Pfostens nach E - E von Fig. 1;
- Fig. 11: den Anschluß eines gerahmten Photovoltaikmoduls an ein Öffnungselement der Gebäudehülle mit davor liegender Abdeckleiste am Beispiel einer Fassade mit Schnitt im Bereich eines Riegels nach F - F von Fig. 1;
- Fig. 12: den Anschluß eines gerahmten Photovoltaikmoduls an ein gerahmtes thermisches Solarkollektormodul mit dazwischen liegendem Dichtprofil am Beispiel eines Flachdachs mit Schnitt im Bereich eines Pfostens nach G - G von Fig. 1;
- Fig. 13: die Verbindung zweier Montageprofile auf Höhe eines Riegels mit einem Profilverbinder und die Anbringung des Profilverbinders an dem Montageprofil auf Höhe eines Pfostens in Draufsicht von außen als Einzelheit J von Fig. 1; und
- Fig. 14: einen Schnitt durch die Einzelheit J nach I - I von Fig. 1.

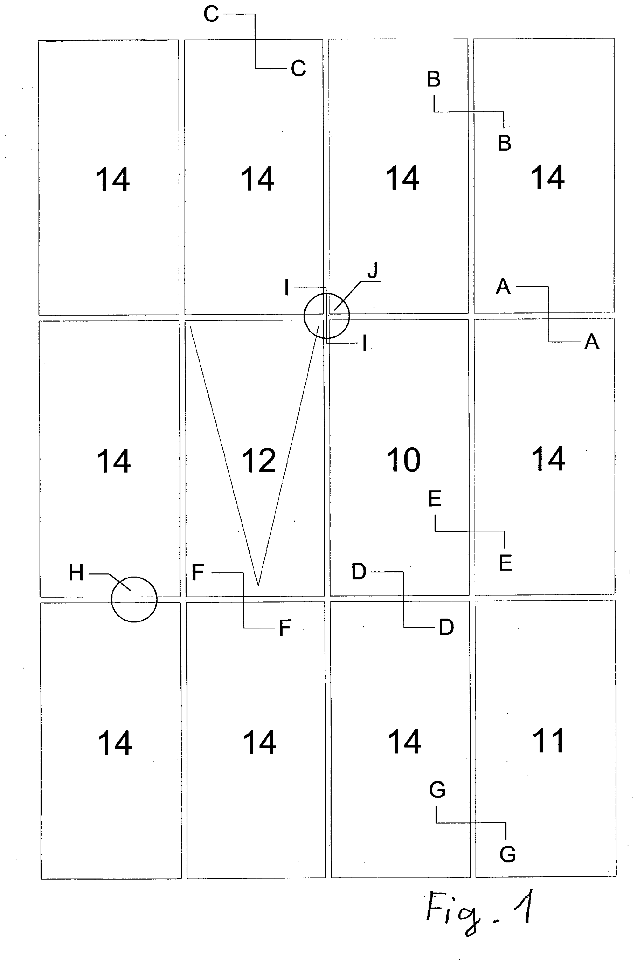

Fig. 1 zeigt in Draufsicht auf eine Gebäudehülle, die im wesentlichen eben ist, ausschnittsweise diejenige Partie, die eine Solarenergiegewinnung ermöglicht. Angrenzende Partien der Gebäudehülle sind von herkömmlichem Aufbau, d. h. gemeinhin nicht zur Gewinnung von Solarenergie bestimmt.

Die in Fig. 1 gezeigte Partie der Gebäudehülle ist von rechteckigem Grundriß. Sie besteht aus zwölf länglich-rechteckigen Gebäudehüllenelementen von gleicher Größe, die in einem rechteckigen Raster vier mal drei angeordnet sind. In den drei Zeilen des Rasters grenzen die Gebäudehüllenelemente mit ihren Längsseiten, und in den vier Spalten des Rasters mit ihren Querseiten aneinander an.

Zu den Gebäudehüllenelementen gehören ein Belichtungselement 10, ein Öffnungselement 12, ein thermisches Solarkollektormodul 11 und neun baugleiche photovoltaische Solarkollektormodule 14.

Solarkollektormodule 11, 14 werden zumeist im Dachbereich eines Gebäudes angebracht. Die in Fig. 1 gezeigte Partie einer Gebäudehülle mag also Teil eines Gebäudedachs sein, das gleichermaßen als Schrägdach oder Flachdach gestaltet sein kann. Die Solarkollektormodule 11, 14 sind Indach-Module. Ihre für die solare Strahlungsenergie empfängliche Außenseite ist Teil der gegen Wasser in aller Form abdichtenden Dachhaut. Wohlgemerkt kann es sich bei der Gebäudehülle aber auch um die Fassade eines Gebäudes handeln.

Der längsseitige Stoß benachbarter Gebäudehüllenelemente 10, 11, 12, 14 wird im folgenden als Pfosten, und ihr querseitiger Stoß als Riegel bezeichnet. Diese Begriffe sind von Fachwerken und Rahmentragwerken her bekannt. Bei einem Schrägdach sind die Pfosten parallel zu den Dachsparren und die Riegel in der Waagrechten parallel zu den Dachlatten gerichtet.

Für die nachstehend beschriebene Verbindung benachbarter Gebäudehüllenelemente 10, 11, 12, 14 ist die Unterscheidung zwischen Pfosten und Riegel insofern von Bedeutung, als die Riegel zur Ableitung von kondensiertem und gegebenenfalls eingedrungenen Wassers hin zu den Pfosten und die Pfosten zur Ableitung des Wassers aus der Gebäudehülle nach außen dienen. Das gilt gleichermaßen für Schrägdächer, Flachdächer und Fassaden.

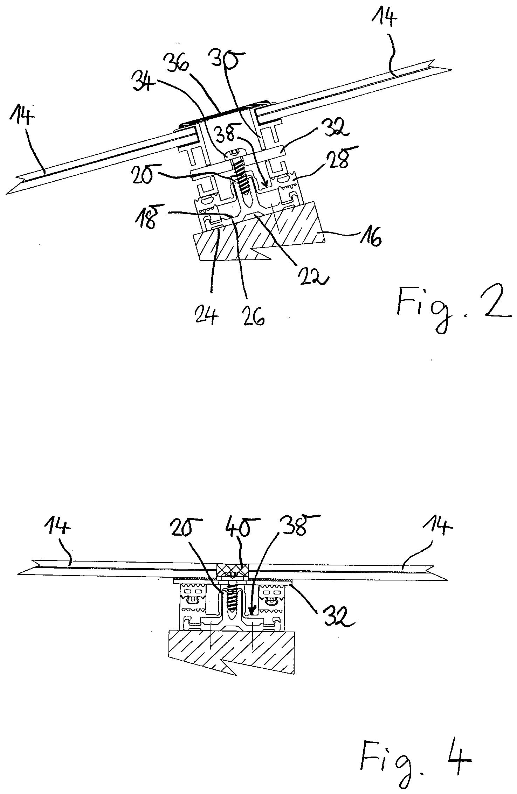

Fig. 2 zeigt am Beispiel eines Schrägdachs die Verbindung zweier benachbarter Photovoltaikmodule 14 im Bereich eines Riegels. Die Photovoltaikmodule 14 sind gerahmt.

An der Tragkonstruktion 16 des Dachs ist ein Montageprofil angebracht, das einen im wesentlichen T-förmigen Profilquerschnitt hat. Der T-Rücken 18 des Profils steht mit der Tragkonstruktion 16 in Anlage. Den T-Mittelschenkel des Profils bildet ein in Profillängsrichtung sich erstreckender Schraubkanal 20.

Die Anlagepartie des Profilrückens 18 weist eine mittige Nut 22 von trapezförmigem Querschnitt und zwei Rechtecknuten 24 beidseits davon auf. Die Nuten 22, 24 erstrecken sich in Profillängsrichtung. Sie werden beidseits von Anlagestegen 26 flankiert.

Das Montageprofil ist am Profilrücken 18 mit der Tragkonstruktion 16 des Dachs verschraubt. Dazu hat der Profilrücken 18 beidseits des Schraubkanals 20 eine Rasterlochung mit gestaffelten, in Profillängsrichtung sich erstreckenden Langlöchern.

Auf der der Tragkonstruktion 16 des Dachs abgewandten Seite ist der Profilrücken 18 des Montageprofils beidseits des Schraubkanals 20 mit je einer Dichtleiste 28 belegt, die sich in Profillängsrichtung erstreckt. Die Dichtleisten 28 dienen als elastisches Auflager für die einander gegenüberliegenden Photovoltaikmodule 14. Sie dichten diese zu der Tragkonstruktion 16 hin ab.

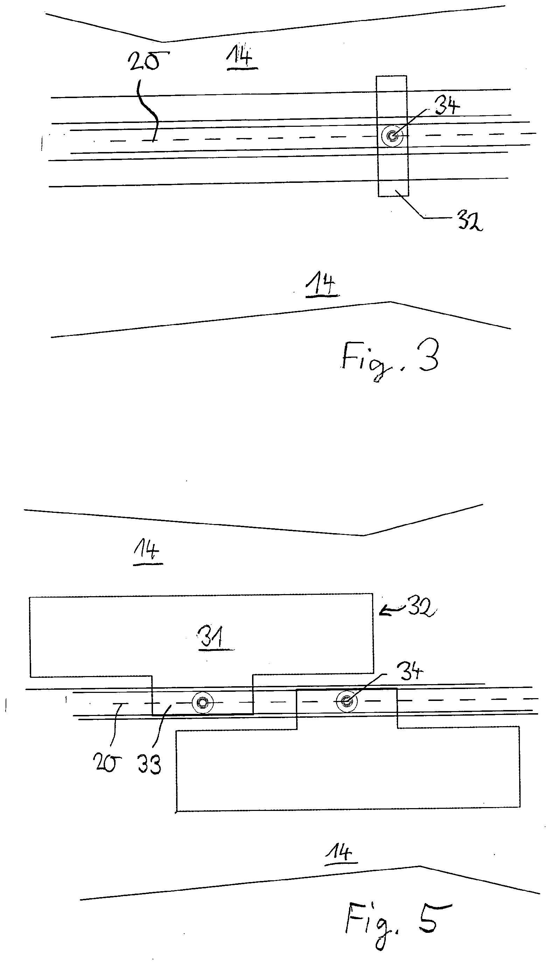

Die Rahmen 30 der benachbarten Photovoltaikmodule 14 sind an den einander zugewandten Seitenwänden mit Schlitzen versehen. In gegenüberliegende Schlitze greifen Halter 32 in Form länglich-rechteckiger Plättchen ein. Fig. 3 läßt erkennen, daß die Halter 32 recht schmal sind. In der Ausführungsform gemäß Fig. 2 und Fig. 3 sind die Halter 32 flach. Sie können, wie nachstehend beschrieben, aber auch abgekröpft sein.

Die Halter 32 sind mit einer mittigen Schraube 34 an dem Schraubkanal 20 festgeschraubt. Sie sind so lang, daß sie sich nur in einer Drehbewegung um die Schraube 34 in die Schlitze einführen lassen. Die Halter 32 spannen die Photovoltaikmodule 14 pratzenartig gegen die Dichtleisten 28 und den Profilrücken 18 des Montageprofils nieder. Sie können deshalb auch als Pratze oder Eindrehanker bezeichnet werden.

Über die Fuge der benachbarten Photovoltaikmodule 14 hinweg ist an deren Außenseite eine Abdeckleiste 36 angeklebt, die das Montageprofil und die Halter 32 unter Abdichtung überdeckt.

Fig. 4 zeigt am Beispiel eines Flachdachs die Verbindung zweier benachbarter Photovoltaikmodule 14 im Bereich eines Pfostens. Die Photovoltaikmodule 14 sind ungerahmt. Die mit dem Schraubkanal 20 verschraubten Halter 32 sind an der Innenseite der Module 14 festgeklebt.

Wie Fig. 5 erkennen läßt, haben die Halter 32 eine große, rechteckige Klebefläche 31 und längliche Montagelaschen 33. Die Halter 32 sind in Profillängsrichtung sich überlappender Anordnung links-rechts versetzt montiert.

Die Dichtebene 38 der Dichtleisten 28 liegt im Bereich der Pfosten tiefer als im Bereich der Riegel (vgl. Fig. 2 und Fig. 4). Dadurch besteht eine für die Wasserableitung aus der Gebäudehülle speziell am Flachdach gebotene Höhenabstufung.

Bei Fig. 4 sind das Montageprofil und die Halter 32 mit einer zwischen den Photovoltaikmodulen 14 befindlichen Dichtung 40 außen überdeckt und abgedichtet. Die Dichtung 40 schließt mit der Außenseite der Photovoltaikmodule 14 bündig eben ab.

Zur Herstellung der Dichtung 40 wird die Fuge zwischen den Photovoltaikmodulen 14 mit Klebstoff verfüllt. Die Verfüllmasse hat beidseitige Flankenhaftung an den Photovoltaikmodulen 14. Sie klebt die Photovoltaikmodule 14 zusammen.

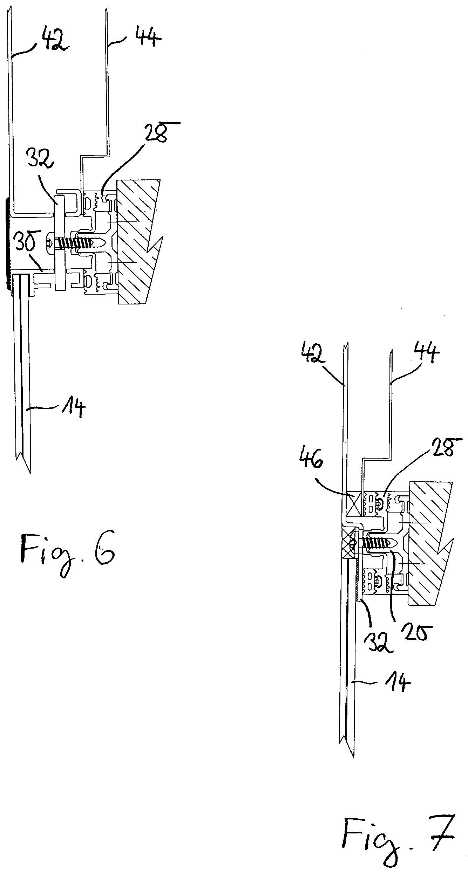

Fig. 6 zeigt am Beispiel einer Fassade den Anschluß eines Photovoltaikelements 14 an ein Randelement 42 der Partie der Gebäudehülle, die nicht oder zumindest nicht notwendigerweise zur Gewinnung von Solarenergie dient.

Das Photovoltaikmodul 14 ist gerahmt. Das Randelement 42 besteht aus hier exemplarisch in U-Form umgekantetem Blech. Seine dem Photovoltaikmodul 14 gegenüberliegende Seitenwand ist wie der Rahmen 30 des Photovoltaikmoduls 14 mit Schlitzen für pratzenartig darin eingreifende Halter 32 versehen. Die Halter 32 sind mit dem Schraubkanal 20 des Montageprofils verschraubt. Zwischen dem Randelement 42 und der zugehörigen Dichtleiste 28 an dem Montageprofil ist eine zur Wasserableitung dienende Folienbahn 44 eingespannt.

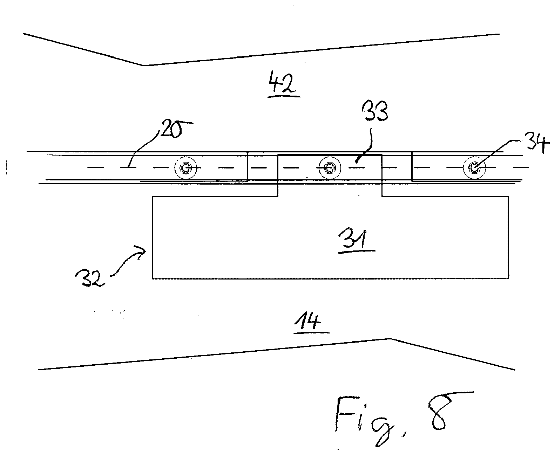

Fig. 7 und Fig. 8 zeigen am Beispiel einer Fassade den Anschluß eines Photovoltaikmoduls 14 an ein Randelement 42, das eine abgekröpfte Blechkante hat und selbst mit dem Schraubkanal 20 des Montageprofils verschraubt ist.

Das Photovoltaikmodul 14 ist ungerahmt und an der Innenseite mit Haltern 32 verklebt. Die Halter 32 sind zwischen den Montageabschnitten des Randelements 42 mit dem Schraubkanal 20 verschraubt. Die Fuge davor ist unter Abdichtung mit Klebstoff verfüllt. Eine zur Wasserableitung dienende Folienbahn 44 ist zwischen der Dichtleiste 28 für das Randelement 42 und einem Zwischenstück 46 eingespannt.

Die vorgenannten Randelemente 42 sind in geeigneter Weise belüftet.

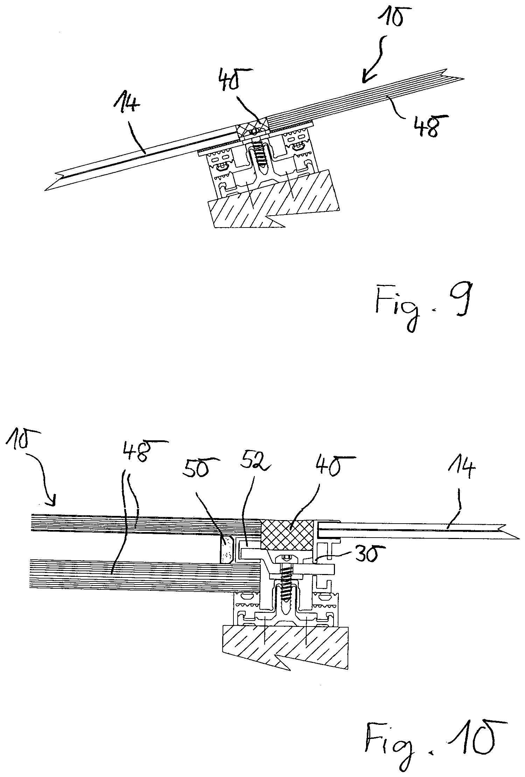

Fig. 9 zeigt am Beispiel eines Schrägdachs den Anschluß eines ungerahmten Photovoltaikmoduls an ein Belichtungselement 10 der Gebäudehülle, das hier mit Einfachverglasung dargestellt ist.

Die mit dem Schraubkanal 20 verschraubten Halter 32 sind jeweils an der Innenseite des Photovoltaikmoduls 14 oder der Glasscheibe 48 festgeklebt. Die Fuge zwischen dem Photovoltaikmodul 14 und dem Belichtungselement 10 ist unter Abdichtung mit Klebstoff verfüllt.

Fig. 10 zeigt am Beispiel eines Flachdachs den Anschluß eines gerahmten Photovoltaikmoduls 14 an ein Belichtungselement 10, das hier mit Isolierverglasung dargestellt ist. Zwischen den beiden Glasscheiben 48 der Isolierverglasung befindet sich am Rand der Scheiben 48 ein Abstandsstück 50 und außen davor Dichtmasse mit einem darin eingebetteten U-Profil 52. Die mit dem Schraubkanal 20 verschraubten Halter 32 sind abgekröpft. Sie greifen in einen Schlitz am Rahmen 30 des Photovoltaikmoduls 14 einerseits und in das U-Profil 52 der Isolierverglasung andererseits ein. Die Fuge zwischen dem Photovoltaikmodul 14 und dem Belichtungselement 10 ist unter Abdichtung mit Klebstoff verfüllt.

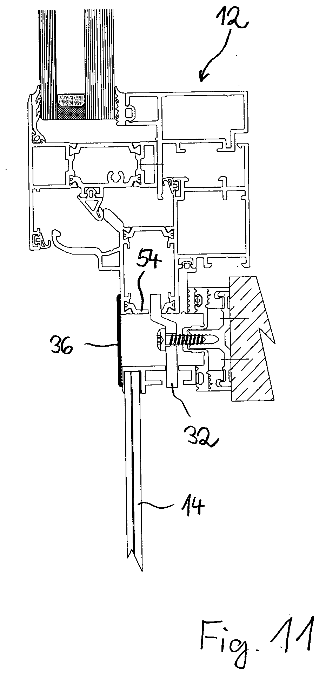

Fig. 11 zeigt am Beispiel einer Fassade den Anschluß eines gerahmten Photovoltaikmoduls 14 an ein Öffnungselement 12. Dabei ist beispielsweise an eine Tür, ein Fenster, eine Brandschutzklappe, ein NRWG (natürliches Rauch-Wärmeabzuggerät) zu denken. Wichtig ist, daß die in die Gebäudehülle integrierte Brandschutzinstallation das angrenzende Photovoltaikmodul 14 nicht beschattet.

Der Rahmen 54 des Öffnungselements 12 ist mit Schlitzen für die abgekröpften Halter 32 versehen. Vor der Fuge zwischen dem Photovoltaikmodul 14 und dem Öffnungselement 12 liegt eine angeklebte Abdeckleiste 36.

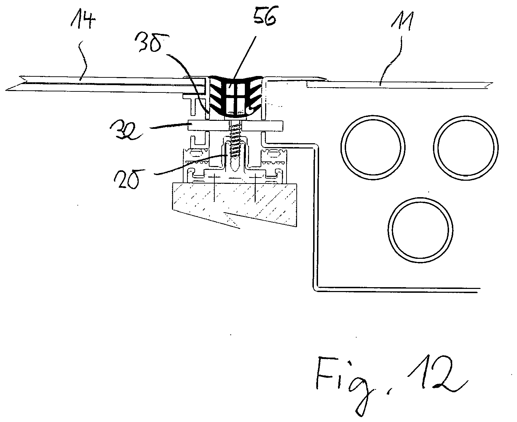

Fig. 12 zeigt am Beispiel eines Flachdachs die Verbindung eines Photovoltaikmoduls 14 mit einem benachbarten thermischen Solarkollektormodul 11. Beide Module 11, 14 sind gerahmt und an den Seitenwänden ihres Rahmens 30 mit Schlitzen für pratzenartig darin eingreifende Halter 32 versehen. Die Halter 32 sind mit dem Schraubkanal 20 des Montageprofils verschraubt. In die Fuge zwischen den Modulen 11, 14 ist ein Dichtprofil 56 eingefügt, das das Montageprofil und die Halter 32 unter Abdichtung überdeckt.

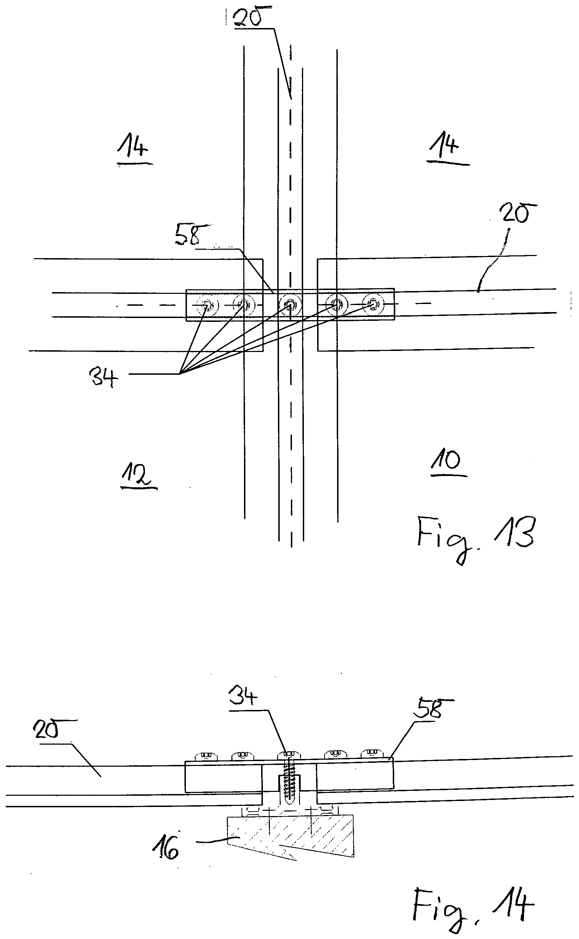

Bei Fig. 13 und Fig. 14 sind die auf der Höhe eines Riegels liegenden Montageprofile für zwei benachbarte, gerahmte Photovoltaikmodule 14 verbunden. Dazu dient ein U-förmiger Profilverbinder 58, der den Schraubkanal 20 der Montageprofile von außen übergreift und mittels je zweier Schrauben 34 mit den Montageprofilen verschraubt ist. Der Profilverbinder 58 ist am Stoß zwischen den Montageprofilen mit einer zentralen, fünften Schraube 34 an dem auf Höhe eines Pfostens liegenden Montageprofil darunter angebracht. Letzteres Montageprofil ist mit einer Tragkonstruktion 16 abgefangen.

Dichtleisten an den Montageprofilen sind bei Fig. 13 und Fig. 14 nicht vorgesehen. Die Systementwässerung erfolgt über die Profilierung der Montageprofile.

Es versteht sich, daß das vorstehend beschriebene Montagesystem für eine Gebäudehülle die verschiedensten Kombinationen bietet. Gerahmte und ungerahmte thermische und photovoltaische Solarkollektormodule 11, 14 können beliebig mit benachbarten Solarkollektormodulen 11, 14, Randelementen 42, Belichtungs- und Öffnungselementen 10, 12 verbunden und die Fugen dazwischen beliebig mit Abdeckleisten 36 überdeckt, mit Dichtprofilen 56 geschlossen oder mit Klebstoff verfüllt werden, um sie abzudichten. In allen Varianten können Gebäudehüllen für ein Schrägdach, Flachdach oder eine Fassade realisiert werden.

Zu der beschriebenen Indach-Montage tritt die Möglichkeit einer Aufdach-Montage der Solarkollektormodule 11, 14 hinzu. Einer dichten Abdeckung der Montageprofile und Halter 32 bedarf es bei der Aufdach-Montage nicht.

### Liste der Bezugszeichen

- 10: Belichtungselement
- 11: thermisches Solarkollektormodul
- 12: Öffnungselement
- 14: photovoltaisches Solarkollektormodul (Photovoltaikmodul)
- 16: Tragkonstruktion
- 18: Profilrücken
- 20: Schraubkanal
- 22: trapezförmige Nut
- 24: Rechtecknut
- 26: Anlagesteg
- 28: Dichtleiste
- 30: Rahmen
- 31: Klebefläche
- 32: Halter
- 33: Montagelasche
- 34: Schraube
- 36: Abdeckleiste
- 38: Dichtebene
- 40: Dichtung (Verfüllmasse)
- 42: Randelement
- 44: Folienbahn
- 46: Zwischenstück
- 48: Glasscheibe
- 50: Abstandsstück
- 52: U-Profil
- 54: Rahmen
- 56: Dichtprofil
- 58: Profilverbinder

## Patentansprüche

1. System, umfassend eine Gebäudehülle und ein thermisches oder photovoltaisches Solarkollektormodul (11, 14), wobei die Gebäudehülle eine Tragkonstruktion (16) umfassend Pfosten und Riegel und ein daran befestigtes Montageprofil zur Anbringung des Solarkollektormoduls (11, 14) in Hinterlüftungsabstand von der Tragkonstruktion (16) neben einem benachbarten Gebäudehüllenelement aufweist, wobei das Kollektormodul (11, 14) mit unterhalb der Modulaußenfläche daran angreifenden Haltern (32) unter Abdichtung an dem Montageprofil angebracht ist, und wobei das Montageprofil und die Halter (32) nach außen dicht abgedeckt sind,
**dadurch gekennzeichnet, dass** das Montageprofil einen Schraubkanal (20) aufweist, und dass zwei auf der Höhe eines Riegels der Gebäudehülle liegende, benachbarte Montageprofile mit einem U-förmigen Profilverbinder (58) verbunden sind, der den Schraubkanal (20) der beiden Montageprofile von außen übergreift und damit verschraubt (34) und am Stoß zwischen den beiden Montageprofilen mit einem dritten, auf Höhe eines Pfostens der Gebäudehülle liegenden Montageprofil darunter verschraubt (34) ist.

2. System nach Anspruch 1, **dadurch gekennzeichnet, dass** das Montageprofil innen einen zur Anlage mit der Tragkonstruktion (16) kommenden Profilrücken (18), einen davon mittig nach außen abstehenden Schraubkanal (20) und eine neben dem Schraubkanal (20) in Profillängsrichtung sich erstreckende Dichtleiste (28) zur elastischen Auflage und Abdichtung des Kollektormoduls (11, 14) hat, und dass die an dem Kollektormodul (11, 14) angreifenden Halter (32) an dem Schraubkanal (20) festgeschraubt sind.

3. System nach Anspruch 2, **dadurch gekennzeichnet, dass** der Profilrücken (18) mit in Profillängsrichtung sich erstreckenden Nuten (22, 24) und Anlagestegen (26) daneben profiliert ist.

4. System nach Anspruch 2 oder 3, **dadurch gekennzeichnet, dass** der Profilrücken (18) eine Rasterlochung mit gestaffelten, in Profillängsrichtung sich erstreckenden Langlöchern aufweist.

5. System nach einem der Ansprüche 2 bis 4, **dadurch gekennzeichnet, dass** die Dichtleiste (28) Teil eines den Schraubkanal (20) übergreifenden Profildichtstreifens ist.

6. System nach einem der Ansprüche 1 bis 5, **dadurch gekennzeichnet, dass** das Kollektormodul (11, 14) gerahmt und die Seitenwände seines Rahmens (30) mit Nuten, Stegen oder Schlitzen versehen sind, in die die Halter (32) pratzenartig eingreifen.

7. System nach einem der Ansprüche 1 bis 5, **dadurch gekennzeichnet, dass** das Kollektormodul (11, 14) ungerahmt und die Halter (32) an der Innenseite des Moduls (11, 14) festgeklebt sind.

8. System nach einem der Ansprüche 1 bis 7, **dadurch gekennzeichnet, dass** das Montageprofil und die Halter (32) außen mit Klebstoff verfüllt sind.

9. System nach Anspruch 8, **dadurch gekennzeichnet, dass** die Klebstoff-Verfüllmasse beidseitige Flankenhaftung an dem Kollektormodul (11, 14) und dem benachbarten Gebäudehüllenelement hat, das Montageprofil und die Halter (32) außen gänzlich überdeckt und mit der Außenseite des Kollektormoduls (11, 14) und des benachbarten Gebäudehüllenelements bündig eben abschließt.

10. System nach Anspruch 8 oder 9, **dadurch gekennzeichnet, dass** zwischen dem Montageprofil mit den Haltern (32) und der Klebstoff-Verfüllmasse ein Trennstreifen liegt.

11. System nach einem der Ansprüche 1 bis 10, **dadurch gekennzeichnet, dass** an das Kollektormodul (11, 14) und das benachbarte Gebäudehüllenelement außen eine Abdeckleiste (36) angeklebt ist, die das Montageprofil und die Halter (32) unter Abdichtung überdeckt.

12. System nach einem der Ansprüche 1 bis 11, **dadurch gekennzeichnet, dass** zwischen das Kollektormodul (11, 14) und das benachbarte Gebäudehüllenelement ein Dichtprofil (56) eingefügt ist, das das Montageprofil und die Halter (32) unter Abdichtung überdeckt.

## Claims

1. System comprising a building envelope and a thermal or photovoltaic solar collector module (11, 14), wherein the building envelope has a carrier construction (16) comprising posts and bars and an assembly profile which is secured thereto for fitting the solar collector module (11, 14) with rear ventilation spacing from the carrier construction (16) beside an adjacent building envelope element, wherein the collector module (11, 14) is fitted to the assembly profile with retention members (32) which engage below the outer module face with sealing, and wherein the assembly profile and the retention members (32) are covered so as to be sealed in an outward direction,
**characterised in that** the assembly profile has a screw channel (20) and **in that** two adjacent assembly profiles which are located at the height of a bar of the building envelope are connected by means of a U-shaped profile connector (58) which engages over the screw channel (20) of the two assembly profiles from the outer side and is consequently screwed (34) and at the joint between the two assembly profiles is screwed (34) therebelow with a third assembly profile which is located at the height of a post of the building envelope.

2. System according to claim 1, **characterised in that** the assembly profile has at the inner side a profile rear (18) which comes into abutment with the carrier construction (16), a screw channel (20) which protrudes centrally outwards therefrom and a sealing bar (28) which extends beside the screw channel (20) in a longitudinal profile direction for resilient support and sealing of the collector module (11, 14), and **in that** the retention members (32) which engage on the collector module (11, 14) are screwed securely to the screw channel (20).

3. System according to claim 2, **characterised in that** the profile rear (18) is profiled with grooves (22, 24) which extend in the longitudinal profile direction and abutment webs (26) therebeside.

4. System according to claim 2 or 3, **characterised in that** the profile rear (18) has a grid perforation with staggered elongate holes which extend in the longitudinal profile direction.

5. System according to any one of claims 2 to 4, **characterised in that** the sealing strip (28) is part of a profile sealing strip which engages over the screw channel (20) .

6. System according to any one of claims 1 to 5, **characterised in that** the collector module (11, 14) is framed and the side walls of the frame (30) thereof are provided with grooves, webs or slots in which the retention members (32) engage in the manner of claws.

7. System according to any one of claims 1 to 5, **characterised in that** the collector module (11, 14) is unframed and the retention members (32) are securely adhesively bonded to the inner side of the module (11, 14).

8. System according to any one of claims 1 to 7, **characterised in that** the assembly profile and the retention members (32) are filled at the outer side with adhesive.

9. System according to claim 8, **characterised in that** the adhesive filling mass has dual-sided flank adhesion to the collector module (11, 14) and the adjacent building envelope element, completely covers the assembly profile and the retention members (32) at the outer side and terminates in a flush planar manner with the outer side of the collector module (11, 14) and the adjacent building envelope element.

10. System according to claim 8 or 9, **characterised in that** a partition strip is located between the assembly profile with the retention members (32) and the adhesive filling mass.

11. System according to any one of claims 1 to 10, **characterised in that** a covering strip (36) is adhesively bonded to the collector module (11, 14) and the adjacent building envelope element at the outer side and covers the assembly profile and the retention members (32) with sealing.

12. System according to any one of claims 1 to 11, **characterised in that** between the collector module (11, 14) and the adjacent building envelope element there is inserted a sealing profile (56) which covers the assembly profile and the retention members (32) with sealing.

## Revendications

1. Système comprenant une enveloppe de bâtiment et un module de collecteur solaire thermique ou photovoltaïque (11, 14), l'enveloppe du bâtiment comprenant une structure porteuse (16) comprenant des montants et des traverses et un profilé de montage, fixés à ceux-ci, pour le montage du module de collecteur solaire (11, 14) à une distance de ventilation arrière de la structure porteuse (16) à proximité d'un élément d'enveloppe de bâtiment, le module de collecteur (11,14) étant monté, avec des supports (32) s'y accrochant en dessous de la surface externe du module, au profilé de montage de manière étanche et le profilé de montage et les supports (32) étant recouverts vers l'extérieur de manière étanche,
**caractérisé en ce que** le profilé de montage comprend un canal de vissage (20) et **en ce que** deux profilés de montage adjacents, se trouvant à la hauteur d'une traverse de l'enveloppe de bâtiment, sont reliés avec un connecteur en forme de U (58), qui vient en prise de l'extérieur avec le canal de vissage (20) des deux profilés de montage et qui est vissé (34) avec celui-ci, et est vissé (34) en dessous en aboutement entre les deux profilés de montage avec un troisième profilé de montage se trouvant à la hauteur d'un montant de l'enveloppe de bâtiment.

2. Système selon la revendication 1, **caractérisé en ce que** le profilé de montage comprend, à l'intérieur, un dos de profilé (18) qui vient en appui avec la structure porteuse (16), un canal de vissage (20) s'éloignant de celui-ci de manière centrale vers l'extérieur et une bande d'étanchéité (28) s'étendant dans la direction longitudinale du profilé à proximité du canal de vissage (20), pour l'appui élastique et l'étanchéification du module collecteur (11, 14) et **en ce que** les supports (32) s'accrochant au module collecteur (11, 14) sont vissés au canal de vissage (20).

3. Système selon la revendication 2, **caractérisé en ce que** le dos de profilé (18) est profilé avec des rainures (22, 24) s'étendant dans la direction longitudinale du profilé et des nervures d'appui (26) à proximité.

4. Système selon la revendication 2 ou 3, **caractérisé en ce que** le dos de profilé (18) comprend une perforation avec des trous oblongs échelonnés s'étendant dans la direction longitudinale du profilé.

5. Système selon l'une des revendications 2 à 4, **caractérisé en ce que** la bande d'étanchéité (28) fait partie d'une bande d'étanchéité de profilé venant en prise avec le canal de vissage (20).

6. Système selon l'une des revendications 1 à 5, **caractérisé en ce que** le module collecteur (11, 14) est muni d'un châssis et les parois latérales de son châssis (30) sont munies de rainures, de nervures ou de fentes dans lesquelles les supports (32) s'emboîtent à la manière de griffes.

7. Système selon l'une des revendications 1 à 5, **caractérisé en ce que** le module collecteur (11, 14) ne comprend pas de châssis et les supports (32) sont collés au côté interne du module (11, 14).

8. Système selon l'une des revendications 1 à 7, **caractérisé en ce que** le profilé de montage et les supports (32) sont remplis à l'extérieur avec de la colle.

9. Système selon la revendication 8, **caractérisé en ce que** la masse de remplissage de colle présente une adhérence sur les flancs du module collecteur (11, 14) et l'élément d'enveloppe de bâtiment adjacent, recouvre de l'extérieur entièrement le profilé de montage et les supports (32) et se termine de manière plane en affleurement avec le côté extérieur du module collecteur (11, 14) et de l'élément d'enveloppe de bâtiment adjacent.

10. Système selon la revendication 8 ou 9, **caractérisé en ce que**, entre le profilé de montage avec les supports (32) et la masse de remplissage de colle, se trouve une bande de séparation.

11. Système selon l'une des revendications 1 à 10, **caractérisé en ce que**, sur le module collecteur (11, 14) et l'élément d'enveloppe de bâtiment adjacent, est collée à l'extérieur une bande de recouvrement (36) qui recouvre le profilé de montage et les supports (32) de manière étanche.

12. Système selon l'une des revendications 1 à 11, **caractérisé en ce que**, entre le module collecteur (11, 14) et l'élément d'enveloppe de bâtiment, est inséré un profilé d'étanchéité (56) qui recouvre le profilé de montage et les supports (32) de manière étanche.
